Europäisches Patentamt

European Patent Office

Office européen des brevets

(11) Veröffentlichungsnummer : **0 028 805**
**B1**

# (12) EUROPÄISCHE PATENTSCHRIFT

(45) Veröffentlichungstag der Patentschrift :
15.12.82

(21) Anmeldenummer : 80106802.4

(22) Anmeldetag : 05.11.80

(51) Int. Cl.³ : **B 22 D 11/04**, B 21 D 26/08,
B 23 K 20/08

(54) **Verfahren zur Wiederherstellung eines gebrauchten Kokillenrohres zum Stranggiessen.**

(30) Priorität : 07.11.79 CH 9966/79

(43) Veröffentlichungstag der Anmeldung :
20.05.81 (Patentblatt 81/20)

(45) Bekanntmachung des Hinweises auf die Patenterteilung : 15.12.82 Patentblatt 82/50

(84) Benannte Vertragsstaaten :
AT DE FR GB IT

(56) Entgegenhaltungen :
DE A 2 701 636
DE A 2 813 067
US A 3 781 966
US A 3 927 546

(73) Patentinhaber : **ACCUMOLD AG**
**Schmittenbach**
**CH-8497 Fischenthal (CH)**

(72) Erfinder : **Mettler, Diethelm**
**Grundwiesstrasse 28**
**CH-8700 Küsnacht (CH)**

(74) Vertreter : **Thalmann, Armin et al**
**CONCAST AG Tödistrasse 7**
**CH-8027 Zürich (CH)**

## Verfahren zur Wiederherstellung eines gebrauchten Kokillenrohres zum Stranggiessen

Die Erfindung betrifft ein Verfahren zur Wiederherstellung eines gebrauchten Kokillenrohres zum Stranggiessen, wobei beschädigte Stellen an den Innenflächen des Rohres ausgeschliffen werden.

Für das Stranggiessen hochschmelzender Metalle, wie Stahl etc., werden, abhängig u.a. vom Strangquerschnitt, einteilige, rohrförmige Kokillen bekannter Ausbildungsformen verwendet. Diese Kokillen können aus Kupfer oder Kupferlegierungen gefertigt sein.

Nach einem gängigen, bekannten Herstellungsverfahren (DE-OS 18 09 633) wird in einen vorgeformten Rohrrohling ein die Innenendmasse und die Endform der Kokille aufweisender Dorn eingedrückt und das Rohr anschliessend durch Ziehen plastisch entsprechend der Dornform verformt. Danach wird der Dorn aus dem bei der Kaltformgebung verfestigten Rohr wieder entfernt.

In den meisten Fällen werden die Innenflächen von Stranggiesskokillen zur Vermeidung der Aufkupferung des Gussproduktes und zur Erhöhung der Lebensdauer mit einem Material höherer Verschleissfestigkeit als Kupfer beschichtet. Ein häufig angewendetes Beschichtungsverfahren ist das allgemein bekannte galvanische Verchromen. Zu diesem Zweck wird in das als Kathode dienende Kupferrohr eine Anode eingebracht, Anode und Kathode in eine Chromsäurelösung getaucht und nach Anlegen einer Gleichspannung dissoziierte Chromanionen auf dem Kupfer abgeschieden. Die Güte der abgeschiedenen Chromschicht hängt u.a von der tatsächlichen Ausbildungsform der Kokille in den Kantenbereichen, aber auch von der Oberflächenbeschaffenheit des zu beschichtenden Materials ab. Eine rauhe Fläche stellt sich auch nach dem Verchromen rauh dar. Auf eine gebrauchte Kokille bezogen, bedeutet dies, dass es aufgrund der durch das Nachbearbeiten, z.B. Schleifen, entstehenden Rauheit zu einer erhöhten Reibung des Stranges in der Kokille kommt, wodurch höherer Verschleiss und Querrisse im gegossenen Produkt entstehen können, welche im schlimmsten Fall zu Durchbrüchen führen.

Nach einem weiteren erst in jüngerer Zeit angewendeten, bekannten Verfahren (DE-AS 25 33 528) werden gebrauchte, verschlissene, gerade oder gebogene, auch einen konischen Formhohlraum aufweisende Rohrkokillen mittels Sprengverformung wieder auf die ursprünglichen Kokillenmasse kalibriert, wobei die Innenflächen des Rohres wiederum die Eigenschaften einer neuen Kokille erhalten. Hierbei werden vor der Sprengverformung Oberflächenfehler von Hand mittels Schleifapparaten ausgeschliffen, um Materialüberlappungen der Fehlerränder während der Sprengverformung von vornherein auszuschalten.

Werden derartig rekalibrierte Rohre beschichtet, kommt es vor, dass die durch die Sprengverformung plattgedrückten, vom Schleifen herrührenden ehemaligen Materialerhebungen — ein Kratzer stellt sich vergrössert wie ein gestreckter Krater als Zusammenspiel aus einer Vertiefung im Werkstoff und einer seitlichen Anhäufung des weggeschobenen Materials dar — sich im elektromagnetischen Spannungsfeld des Galvanisierungsprozesses wieder aufrichten, Chrom sich auch auf ihnen abscheidet und sich als Endprodukt eine rauhe Kokilleninnenfläche darbietet, mit den oben bereits beschriebenen Nachteilen.

Die vorliegende Erfindung will die mit einem Nachbearbeiten verbundenen, oben beschriebenen Nachteile vermeiden und setzt sich zum Ziel, ein geeignetes kostengünstiges Verfahren zur oberflächlichen Behandlung von Kokilleninnenflächen zu schaffen, mit welchem bei geringem Materialabtrag eine entscheidende Verbesserung der Oberflächenqualität in Hinblick auf ein nachfolgendes galvanisches Beschichten erzielt wird. Im weiteren sollen durch das Nachbearbeiten im gegossenen Produkt entstehende Nachteile vermieden werden.

Dies wird dadurch erreicht, dass nach dem Ausschleifen in den Kokillenhohlraum Reibkörper eingebracht, die Rohrenden verschlossen, das Kokillenrohr und die Reibkörper in eine Relativbewegung zueinander versetzt und anschliessend die Innenflächen wieder galvanisch beschichtet werden.

Hierdurch werden, wie Erfahrungen sowohl mit Kieselsteinen als auch mit anderen erhältlichen Reibkörpern gezeigt haben, mit einem billigen Verfahren derartig gute Oberflächen erhalten, dass beim Beschichten eine durchwegs feine und gleichmässige Chromschicht erzielt wird. Mit feinen Oberflächen jedoch wird eine zu hohe Reibung zwischen Gussprodukt und Kokilleninnenfläche vermieden und damit werden in der Folge Durchbrüche aus diesem Grunde weitgehend ausgeschaltet.

Die angestrebte glatte Oberfläche wird mit geringstem Materialabtrag erreicht, da vor allem anderen erst störende Materialerhebungen abgetragen werden. Durch die damit erzielbare, gleichmässige Chromschicht wird eine längere Lebensdauer der Kokillen erhalten.

Vorteilhaft wird die Relativbewegung durch ein Drehen des Kokillenrohres um seine Längsachse in annähernd horizontaler Lage errreicht, indem dadurch die Relativbewegung der Reibkörper im wesentlichen senkrecht zu den vom Schleifen herrührenden Kratzern erfolgt.

Bei Anwendung des erfindungsgemässen Verfahrens hat es sich als vorteilhaft erwiesen, dass die Innenflächen des Rohres nach dem Bearbeiten mit den Reibkörpern durch Sprengverformung rekalibriert werden. Dadurch kann eine zeitintensive Feinschleiferei von Hand vermieden und aufgrund eines höheren Durchsatzes eine beträchtliche Kostenersparnis erreicht werden.

Im weiteren kann vermieden werden, dass durch die Hochenergieverformung plattgedrückte Materialunebenheiten, wie sie bei einer Schleifbearbeitung unvermeidbar sind, auf der Kokilleninnenfläche sich im galvanischen Spannungsfeld wieder aufrichten und es nach dem Beschichten zu der eingangs schon beschriebenen rauhen Chromschicht, mit den damit verbundenen Nachteilen kommt.

Ferner hat sich gezeigt, dass für das Erzielen der gewünschten Feinheit der Innenflächen bei mit Reibkörpern behandelten Kokillenrohren bedeutend weniger Sprengstoff benötigt wird. Dadurch wird die Standzeit der Dorne beträchtlich erhöht, so dass die Dornkosten pro Kokillenrohr wesentlich vermindert werden.

Im folgenden soll die Erfindung in ihren Einzelheiten anhand der Bearbeitung eines gebrauchten Kokillenrohres näher beschrieben werden. Eine gebogene, konische Kokille für das Stranggiessen von Stahlknüppeln von 100 mm$^2$ ist nach ca. 250 Güssen aufgrund von Kratzern und Riefen an den Kokilleninnenwänden, sowie aufgrund intolerierbarer Aenderung ihrer Innengeometrie aus der laufenden Produktion ausgeschieden worden.

Mit Hilfe des Verfahrens zur Wiederherstellung eines gebrauchten Kokillenrohres ist es möglich, dieses Rohr zumindest einer weiteren Kokillenreise zuzuführen. Hierzu werden nach dem Entfernen der galvanisch aufgebrachten Schicht beschädigte Stellen an den Innenflächen des Rohres mit Hilfe von Handschleifapparaten ausgeschliffen. Hieran anschliessend folgte nach dem Stande der Technik eine Feinbearbeitung mit Schleifmitteln feiner Körnung. Diese Feinbearbeitung ist sehr zeitintensiv, stellt durch den sehr feinen Schleifstaub eine unzumutbare gesundheitliche Belastung für das Personal dar und hat obendrein nicht die gewünschte Wirkung, nämlich eine Kokillenoberfläche frei von Kratz- und Schleifspuren zu erzielen. Um diese Nachteile zu eliminieren, wird der grobgeschliffene Kokillenhohlraum zu ca. 50 % mit Schleifmaterial, z.B. Kieselsteinen und geeigneten Zusätzen wie Wasser etc., gefüllt und an beiden Enden mit Platten verschlossen. Eine durch den Kokillenhohlraum hindurchführende Welle durchstösst mit ihren beiden Enden die abdichtenden Platten an den Kokillenenden und ist in horizontaler Lage beidseits gelagert. Ein Ende der Welle ist, in diesem Beispiel über einen Kettenantrieb, mit einem Antriebsmotor, welcher die gewünschte Relativbewegung zwischen Kokillenrohr und Reibkörpern bewirkt, verbunden. Beliebig viele dieser Vorrichtungen können untereinander verbunden sein und von der gleichen Antriebseinheit, z.B. einem reversierbaren Getriebemotor, bewegt werden. Es können Kupplungen zum unabhängigen Ab- und Zu- schalten einzelner dieser Vorrichtungen vorgesehen sein. Hierdurch können einzelne Kokillen, abhängig von ihrem Ausgangszustand, unterschiedlich lange gedreht werden, ohne den Glättvorgang bei anderen Kokillen zu beeinflussen.

Durch Einschalten der Antriebseinheit wird das Kokillenrohr um seine Längsachse gedreht, wodurch es zu einem ständigen Ableiten der Reibkörper, verbunden mit einer Material-Erosion im Hohlraum der Kokille, kommt. Aufgrund der Form der Reibkörper — es können rechteckige, elliptische, polygorale etc. Körper mit abgerundeten Ecken verwendet werden — und ihrem geringen Schleifdruck, wird eine, Kratzspuren hinterlassende Erosion vermieden. Durch Variierung der Drehgeschwindigkeit, sowie der Behandlungsdauer, für das angeführte Beispiel ca. 48 Std., kann der Materialabtrag beeinflusst werden. Bei der vorliegenden Bogenkokille wurde in gewissen gleichmässigen Zeitabständen zudem der Drehsinn geändert, wodurch ein ungleichmässiges Abtragen in den Kantenbereichen vermieden werden konnte. Nach Beendigung des Fein-Reib-Vorganges wurde die Kokille galvanisch mit Chrom beschichtet. Hiernach präsentierten sich die Innenflächen der Kokille in einem neuwertigen Zustand.

Neben einer Rotationsbewegung um die Längsachse der Kokille sind andere Bewegungsformen wie Rotation um die Querachse, Rotation um die Längsachse mit überlagerter, eine Zentrifugalkraft erzeugende Bewegung auf einer Kreisbahn zur Verstärkung des Schleifdruckes, Taumel- und Nickbewegungen etc. denkbar.

Durch Bereitstellen einer Vielzahl solcher Vorrichtungen ist ein wesentlich rationelleres Bearbeitungsverfahren — verglichen mit dem Feinschleifen von Hand — der Innenflächen vor dem Explosionsverformen verbunden mit einer entscheidenden Verbesserung der Oberflächenqualität als Voraussetzung für eine gute Verchromung und damit einer erhöhten Lebensdauer der Kokille erzielbar.

Durch den Verschleiss im gebrauchten Kokillenrohr, durch den Verzug durch die Wärmeeinwirkung und das Ausschleifen entstehen Abweichungen von der ursprünglichen Kokillengeometrie, die sich auf die Wiederverwendung des Kokillenrohres nachteilig auswirken können. Durch das Rekalibrieren mittels Sprengverformen, wie oben beschrieben ist, kann die ursprüngliche Kokillengeometrie wieder hergestellt werden.

Das beschriebene Verfahren kann auch für Rohrkokillen zum Stranggiessen von Nichteisenmetallen Anwendung finden.

**Ansprüche**

1. Verfahren zur Wiederherstellung eines gebrauchten Kokillenrohres zum Stranggiessen, wobei beschädigte Stellen an den Innenflächen des Rohres ausgeschliffen werden, dadurch gekennzeichnet, dass nach dem Ausschleifen in den Kokillenhohlraum Reibkörper eingebracht, die Rohrenden verschlossen, das Kokillenrohr und die Reibkörper in eine Relativbewegung zueinander versetzt und anschliessend die Innenflächen wieder galvanisch beschichtet werden.

2. Verfahren nach Anspruch 1, dadurch gekennzeichnet, dass die Relativbewegung durch Drehen des Kokillenrohres um seine Längsachse in annähernd horizontaler Lage erreicht wird.

3. Verfahren nach Anspruch 1 oder 2, dadurch gekennzeichnet, dass nach dem Bearbeiten mit den Reibkörpern die Innenflächen des Rohres durch Sprengverformung rekalibriert werden.

## Claims

1. A method of restoring a used mould tube for continuous casting, wherein damaged areas on the interior faces of the tube are ground out, characterized in that, following grinding, abrading elements are introduced into the mould cavity, the ends of the tube are sealed, the mould tube and the abrading elements are set in motion relative to each other, and the inner surfaces are then recoated by electroplating.

2. A method according to claim 1, characterized in that the relative motion is obtained by rotating the mould tube about its longitudinal axis in an approximately horizontal position.

3. A method according to claim 1 or 2, characterized in that, following treatment by the abrading elements, the inner surfaces of the tube are recalibrated by explosive deformation.

## Revendications

1. Procédé de réfection d'un tube de lingotière usagé pour la coulée continue, selon lequel on creuse à la meule les endroits endommagés sur les faces intérieures du tube, caractérisé en ce que, après le creusement à la meule des défauts superficiels de la cavité intérieure de la lingotière, on introduit dans cette cavité des corps de friction, on ferme les extrémités du tube, on confère un mouvement relatif au tube de lingotière et aux corps de friction pour lisser les faces intérieures et, ensuite, on y applique de nouveau un revêtement par électrolyse.

2. Procédé selon la revendication 1, caractérisé en ce que l'on produit le mouvement relatif par rotation du tube de lingotière autour de son axe longitudinal en position sensiblement horizontale.

3. Procédé selon la revendication 1 ou 2, caractérisé en ce que, après le traitement par les corps de friction, on produit le recalibrage des faces intérieures du tube par déformation à l'explosif.